# EUROPEAN PATENT APPLICATION

(11) **EP 2 028 827 A2**
(43) Date of publication of application: **25.02.2009**
(21) Application number: 08275039.9
(22) Date of filing: 28.07.2008
(51) Int. Cl.: H04L 29/08

(54) **Application generation system and method**

(30) Priority: 26.07.2007 GB 0714622
(71) Applicant: Affle Limited, 1 Stanford Road London W8 5PP (GB)
(72) Inventor: Gupta, Amit, London, greater London W8 5PP (GB)
(74) Representative: Exell, Jonathan Mark

(57) **Abstract**

A method and system for generating an application for a client node is disclosed. Identification data is received from the client node 10 and stored in a repository 40. A unique identifier is associated with the stored data and stored with a link to the stored data. An application is generated for the client node 10 which includes the unique identifier embedded in the application. The application is arranged to present the unique identifier to a remote authentication system during execution. The client node 10 is identified in dependence on the stored data upon presentation of the unique identifier to the remote authentication system by the client node.

## Description

### Field of Invention

The present invention relates to a system and method for dynamically generating personalized and trackable applications on a mobile phone network.

### Background to the Invention

Developing applications for mobile phones has been a difficult task for most application providers because of a lack of standardized application programmer interfaces (APIs) across a large number of platforms.

One of the largest efforts around creating a standard platform with common APIs has been Java 2 Micro Edition (J2ME). With J2ME, each phone device manufacturer creates their own implementation of the J2ME specification (called a Java Virtual Machine or JVM). While this has led to that ability to create cross platform applications, these applications are severely restricted in their ability to access lower level functionality of the phone's functions/operating system/file system. To complicate matters further, some of these restrictions are not universally applied, and a lot of freedom is left to the manufacturer to allow or deny J2ME application access to low level information and functionality. For example, a J2ME application running on a Nokia (RTM) phone may not have the ability to send a text message, whereas on a Motorola (RTM) phone, it may be allowed.

Another example of low level functionality that is not universally available to J2ME applications is access to the phone user's unique identity number (MSISDN). Access to this unique identifier is essential for applications that need to protect information or limit the amount of information sent to a specific device. As a result of this J2ME access restriction, systems have been created to work around it. One of the most used systems that is currently employed by operators is where they append the user's unique-ID, XXX, to a URL that the user tries to access. (eg: http://www.domain.com is appended with "&id=XXX").

This method has 2 distinct disadvantages:
1) It is not universally applied nor is there any standard for it. The application developer needs to have a pre-existing relationship with many different operators so that the unique-id is appended to URLs that are being accessed through the operator's Access Point (APN). If an application developer uses this method with users on a T-mobile (RTM) network, it is not likely to automatically work on a Cingular (RTM) network without making an agreement with Cingular (RTM).
2) This method only works for applications that make web or HTTP requests. Applications that have proprietary network protocols are incompatible with this method because they do not connect to the server using a standard HTTP URL.

An example of an application that requires uniqueness of the user device is a mobile couponing application. It is essential that the coupons are not able to be copied, and that they are only delivered once to a single device. When the J2ME application contacts the server for its cache of coupons, it needs to provide a unique-id that is tied to the user's phone. Because the J2ME application has restricted access to this information, current systems utilize the operator-appended method described above, or alternatively rely on the user to supply the identification information.

The problem with the user supplied identification information is that it is subject to ad-hoc replication and impersonation. Here are 3 example problems that can arise:
1) The user can register with multiple ID's and thereby get multiple replicas of a coupon;
2) The user can supply someone else's information and access the other person's coupons;
3) The user can register other users without their permission;

### Statement of Invention

According to an aspect of the present invention, there is provided a method of generating an application for a client node comprising:
receiving identification data from the client node;
storing the identification data;
associating a unique identifier with the stored data;
storing the unique identifier linked to the stored data;
generating an application for the client node including embedding the unique identifier in the application, wherein the application is arranged to present the unique identifier to a remote authentication system during execution; providing the application for installation on the client node; and,
identifying the client node in dependence on the stored data upon presentation of the unique identifier to the remote authentication system by the client node.

The step of receiving identification data may further comprise:
receiving a registration message from the client node and extracting at least some of the identification data from the registration message.

Preferably, the client node comprises a mobile telephony device and the registration message comprises a simple messaging service message.

The step of storing the unique identifier may further comprise:
restricting access to the unique identifier to prevent remote access to the identifier.

The step of providing the application may further comprise:
publishing the application on at web accessible location and providing a unique resource locator, URL, to the web accessible location.

The step of providing the application may further comprise pushing the application to the client node.

The step of identifying the client node may further comprises:
authenticating the client node by determining the stored identification data in dependence on the presented unique identifier; and,
cross-checking the determined stored identification data with data obtained from the client node.

The method may further comprise expiring the unique identifier; and, updating the application with a new unique identifier upon next performance of the identification step.

According to another aspect of the present invention, there is provided a system for generating an application for a client node comprising:
an application generation system, an identification system and a data repository:
   the application generation system being configured to receive identification data from the client node and store the identification data in the data repository, wherein the application generation system is further configured to associate a unique identifier with the stored data, to store the unique identifier linked to the stored data, to generate an application for the client node, and to provide the application for installation on the client node
wherein the generated application has the unique identifier embedded within it, and is configured upon execution on the client node to present the unique identifier to the authentication system;
wherein the identification system is configured to identify the client node in dependence on the data stored in the data repository linked to the unique identifier upon presentation of the unique identifier by the client node.

The application generating system may further comprise:
a registration sub-system configured to receive a registration message from the client node and to extract at least some of the identification data from the registration message.

The application generation system may be configured to prevent remote access to the data repository.

The application generation system may be configured to provide the application by publishing the application on at web accessible location and providing a unique resource locator, URL, to the web accessible location.

The application generation system may be configured to provide the application by pushing the application to the client node.

The identification system may be configured to authenticate the client node by determining the stored identification data in dependence on the presented unique identifier; and, cross-checking the determined stored identification data with data obtained from the client node.

According to another aspect of the present invention, there is provided a computer-readable medium encoded with a computer program, the computer program comprising:
computer program code for receiving identification data from the client node; computer program code for storing the identification data;
computer program code for associating a unique identifier with the stored data;
computer program code for storing the unique identifier linked to the stored data;
computer program code for generating an application for the client node including embedding the unique identifier in the application, wherein the application is arranged to present the unique identifier to a remote authentication system during execution;
computer program code for providing the application for installation on the client node; and,
computer program code for identifying the client node in dependence on the stored data upon presentation of the unique identifier to the remote authentication system by the client node.

The computer program may further comprise:
computer program code for receiving a registration message from the client node and computer program code for extracting at least some of the identification data from the registration message.

The computer program code for providing the application may further comprise:
computer program code for publishing the application on at web accessible location and computer program code for providing a unique resource locator, URL, to the web accessible location.

The computer program code for providing the application may further comprise computer program code for pushing the application to the client node.

The computer program code for identifying the client node may further comprise:
computer program code for authenticating the client node by determining the stored identification data in dependence on the presented unique identifier; and,
computer program code for cross-checking the determined stored identification data with data obtained from the client node.

The computer program may further comprise:
computer program code for expiring the unique identifier; and,
computer program code for updating the application with a new unique identifier upon next performance of the identification step.

Embodiments of the present invention seek to provide a method for dynamically generating unique application packages (UAPs) that uniquely identify a client device when unique information is not available to a client application. Preferably, the method employs an out-of-band installation-signaling channel to help create a UAP-to-client device mapping.

Prefered embodiments of the present invention relate to a system and method for dynamically generating personalized and trackable applications on a mobile phone network which are arranged to uniquely identify a device even when the application does not have access to user or device identification information.

### Brief Description of the Drawings

An embodiment of the present invention will now be described, by way of example only, with reference to the accompanying drawing in which:

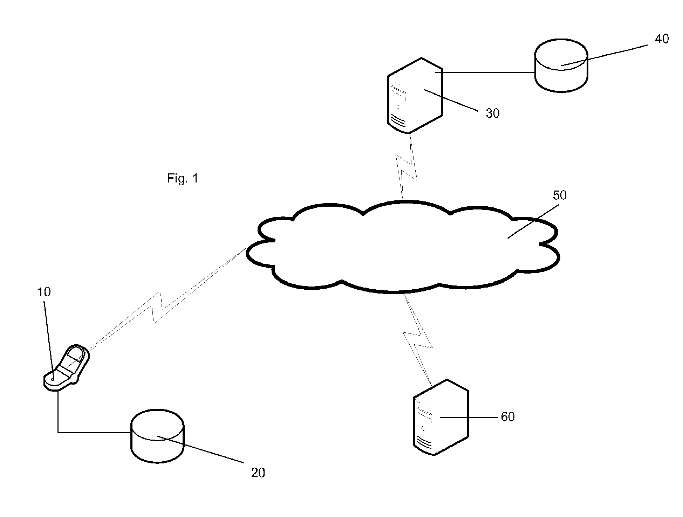

Figure 1 is a schematic diagram of a an application generation system according to an embodiment of the present invention.

### Detailed Description

Figure 1 is a schematic diagram of an application generation system according to an embodiment of the present invention.

A client node 10 includes a data repository 20 (referred to herein as the first repository) and is arranged to communicate via a data communications network 50 with a remote server 30. The remote server 30 runs an application generation system and also has a data repository 40 (referred to herein as the second repository). A service provider provides a service to the client node 10 via a service provider server 60.

When the application generation system is initialized, the client node 10 communicates a registration message to the remote server 30 via the network 50. Upon receipt of the registration message, the remote server 30 extracts the client node's phone number or other identification information and stores it in the second repository 40. The remote server 30 then creates a link in the form of a unique resource locator (URL) in this example. The URL includes a dynamically generated unique id (referred to for simplicity as XXX but it may be any textual string). This new unique ID is mapped to the information in the second repository 40 and is stored privately in the repository 40 so no outsider can see or access it.

The remote server 30 then creates a unique application for the client node 10 by embedding the unique ID in the application.

The application is then provided to the client node 10 for storage in the first repository 20 for immediate or later execution. For example, a link to a download page may be provided to the client node 10. Alternatively, the application may be pushed to the client node 10 over the network 50 or it may be provided by other means.

In this example, the application may be a user interface for accessing a service provided by the service provider server 60. When the application is executed on the client node 10, it communicates the embedded unique ID to the remote server 30 acting as an identification system which, using and information stored in the second repository 40, is able to identify the client node 10 by cross-checking the embedded unique ID with the information stored in the second repository 40. The remote server 60 can then provide data to the service provider server 60 on the identity of the client node 10.

It will be appreciated that in addition to identifying the client node 10 based on the embedded unique ID, the remote server may provide further authentication such as re-checking the data stored on in the second repository 40 against that presented by the client node 10. Although this step is not necessary as authentication has happened during generation of the application and provision to the client node 10, authentication is desirable as it avoids problems of the application being given to other users.

It will also be appreciated that the remote server 30 and the service provider server 60 could be the same system/server. In another alternative, the application generation system and the identification system may be separate (potentially remote) systems that share a common data repository. While authentication and application generation are preferably provided as services to other service providers, there will be scenarios where an enterprise will want an integrated system that combines application generation and authentication within the service framework/system itself.

Optionally, the unique ID may be periodically changed. In this case, the application may be updated when it next authenticates with the remote server 30. Alternatively, the client node 10 may be forced to download and install a new application when the unique ID is changed.

An more detailed example method of operation may include the steps of:
*1. User* sends an SMS (or other text message or data communication) to a predefined number/address from a client node 10 which may be any form of computing device but is preferably a mobile telephony device such as a mobile phone, smart phone, personal digital organizer or the like. The message may be of the form of a simple text such as sending "register" to +1-212-555-2000.
2. SMS *Operator Gateway* (not shown but would be part of the network 50) receives the text and forwards it to the remote *Server* 30.
3a. The remote server 30 extracts the sender's phone number or other identification information from the text message and creates a URL with a new dynamically generated unique id (XXX). This new unique ID is mapped to the Sender's information and stored privately in the second repository 40 so no outsider can see. At this point, the remote server 30 has the option to generate a Unique Application Package (UAP) for the user. There are other steps where the UAP can be alternatively generated, and these are discussed below. The determination of at which point to generate the UAP is based upon performance requirements or additional information requirements.
3b. The remote server 30 responds to the registration message sent by the User via an SMS message and the response contains a link that includes the new unique ID.
4.The User clicks the link in the response message. (eg: http://www.a_server.com/clientid/<uniqueid>)
5. Based on the Phone device's UserAgent string and the dynamically generated unique id (XXX), the remote server 30 returns a web page with the link [which is also having id (XXX)] to download Java Application Descriptor (JAD) file. The JAD file is part of an existing standard for installation of mobile software. At this point, a UAP can be generated much like in Step 3a above. The advantage of generating the UAP at this point is if the client's device model needs to be known, it can be determined from the UserAgent string and other information available from the device. (eg, applications for Nokia (RTM) phones may need to be different than Motorola (RTM) phones)
6. The User clicks the link in the web page
7. The remote server 30 responds with the JAD file which contains a Java Archive (JAR) file link.
8.The phone device's Mobile Application Installer requests the JAR file with the unique id.
9a. The remote server 30 can optionally dynamically generate the UAP at this point instead of at points 3a or 5 above. Once again, this can be due to performance reasons.
9b. The remote server 30 serves the UAP JAR file to the client device
10a. The Client node 10 installs the UAP JAR file in its data repository 20.
10b. upon completed installation, the installer notifies the remote server 30 of completion, and the remote server 30 then invalidates the download link for further use. This prevents forwarding or copying of the download link.
11. After the Application Launches, it presents the Unique ID to the server 30 for identification purposes. The Server 30 can optionally choose to change the ID of the client Device and notify it to update it's ID. This is to allow for rotating unique IDs which help to reduce hacker attempts at impersonation of a user.

Although this proposed method requires more computation time upon registration, it is clearly superior to the existing methods employed by operators for the following reasons:
(1) It is operator agnostic. The method will work across operators
(2) It overcomes the need of the J2ME application to have access to uniquely identifiable information regarding the device. It does this by using an out of band registration channel (such as a text message or SMS)
(3) Each package is uniquely generated for each device.
(4) Each device's key is periodically changed and prevents impersonation

The above-mentioned method is not intended to be limited to just J2ME application development and is just mentioned for illustrative purposes. It can be applied to any generic installation package in any language and on any platform.

## Claims

1. A method of generating an application for a client node comprising:
receiving identification data from the client node;
storing the identification data;
associating a unique identifier with the stored data;
storing the unique identifier linked to the stored data;
generating an application for the client node including embedding the unique identifier in the application, wherein the application is arranged to present the unique identifier to a remote authentication system during execution; providing the application for installation on the client node; and,
identifying the client node in dependence on the stored data upon presentation of the unique identifier to the remote authentication system by the client node.

2. A method according to claim 1, wherein the step of receiving identification data further comprises:
receiving a registration message from the client node and extracting at least some of the identification data from the registration message.

3. A method according to claim 2, wherein the client node comprises a mobile telephony device and the registration message comprises a simple messaging service message.

4. A method according to any preceding claim, wherein the step of storing the unique identifier further comprises:
restricting access to the unique identifier to prevent remote access to the identifier.

5. A method according to any preceding claim, wherein the step of providing the application further comprises:
publishing the application on at web accessible location and providing a unique resource locator, URL, to the web accessible location.

6. A method according to any of claims 1 to 4, wherein the step of providing the application further comprises pushing the application to the client node.

7. A method according to any preceding claim, wherein the step of identifying the client node further comprises:
authenticating the client node by determining the stored identification data in dependence on the presented unique identifier; and,
cross-checking the determined stored identification data with data obtained from the client node.

8. A method according to any preceding claim, further comprising:
expiring the unique identifier; and,
updating the application with a new unique identifier upon next performance of the identification step.

9. A system for generating an application for a client node comprising:
an application generation system, an identification system and a data repository:
the application generation system being configured to receive identification data from the client node and store the identification data in the data repository, wherein the application generation system is further configured to associate a unique identifier with the stored data, to store the unique identifier linked to the stored data, to generate an application for the client node, and to provide the application for installation on the client node
wherein the generated application has the unique identifier embedded within it, and is configured upon execution on the client node to present the unique identifier to the authentication system;
wherein the identification system is configured to identify the client node in dependence on the data stored in the data repository linked to the unique identifier upon presentation of the unique identifier by the client node.

10. A system according to claim 9, wherein the application generating system further comprises:
a registration sub-system configured to receive a registration message from the client node and to extract at least some of the identification data from the registration message.

11. A system according to claim 9 or 10, wherein the application generation system is configured to prevent remote access to the data repository.

12. A system according to claim 9, 10 or 11, wherein the application generation system is configured to provide the application by publishing the application on at web accessible location and providing a unique resource locator, URL, to the web accessible location.

13. A system according to claim 9, 10, 11 or 12, wherein the identification system is configured to authenticate the client node by determining the stored identification data in dependence on the presented unique identifier; and, cross-checking the determined stored identification data with data obtained from the client node.

14. A computer program comprising computer program code means for performing all of the steps of any of claims 1 to 8 when said program is run on a computer.

15. A computer program as claimed in claim 14 embodied on a computer readable medium.
